# EUROPEAN PATENT APPLICATION

(11) **EP 0 962 268 A1**
(43) Date of publication of application: **08.12.1999**
(21) Application number: 99201724.4
(22) Date of filing: 01.06.1999
(51) Int. Cl.: B21D 53/04

(54) **A method for manufacturing a storage vessel for storing a medium, as well as a storage vessel manufactured in accordance with this method**

(30) Priority: 02.06.1998 NL 1009294
(71) Applicant: Solistor B.V., 5503 LV Veldhoven (NL)
(72) Inventor: Bazelmans, Jozef Alfons Maria, 5506 BG Veldhoven (NL)
(74) Representative: Timmermans, Anthonius C.Th., Ir.

(57) **Abstract**

A method for manufacturing a storage vessel for storing a medium, in particular for use in solar energy systems, which storage vessel comprises a lower wall and an upper wall, which are interconnected by joining surfaces which extend obliquely with respect to said upper and said lower wall, in such a manner that a storage vessel comprising channels of triangular section is formed, wherein
- a first rectangular plate is folded to one side and the other about substantially parallel lines, in such a manner that a strip is formed comprising first plate portions, which extend in a first plane, and second plate portions, which extend in a second plane, with connecting plate portions extending between said first and said second plate portions, after which
- an upper plate and a lower plate are placed on said first and second plate portions, which
- plates are connected along substantially parallel lines to the centres of, respectively, each of said first and second plate portions, and
- the whole is subsequently compressed, whereby the connecting plate portions deflect sideways, after which
- the edges of said upper plate and said lower plate are connected together all around, and
- a medium is introduced into said vessel under a high pressure, as a result of which the whole is blown up until the connecting portions of said first plate between the welding lines are entirely stretched and the portions of said upper and said lower plate between said welding lines are plastically deformed by being bent into a portion of a circular arc.

## Description

The invention relates to a method for manufacturing a storage vessel for storing a medium, in particular for use in solar energy systems, which storage vessel comprises a lower wall and an upper wall, which are interconnected by joining surfaces which extend obliquely with respect to said upper and said lower wall, in such a manner that a storage vessel comprising channels of triangular section is formed and that the portions of said lower wall and said upper wall positioned between said joining surfaces are plastically deformed, mainly by bending, into portions of a circular cylinder by means of a pressurized medium.

A method of the above kind for manufacturing a storage vessel for storing a medium is disclosed in Dutch patent No. 1002215, which shows in particular in Figure 5 a storage vessel comprising channels of triangular section. Such a known storage vessel is manufactured by folding a single plate along substantially parallel lines to form a so-called Omega-profile, thus providing a structure comprising triangular channels extending parallel to each other. Following said folding, the bases of the triangles thus formed are welded together. Following said welding, a pressurized medium is introduced into said triangular channels, as a result of which said bases are blown up to form portions of a circular cylinder, which takes place substantially as a result of bending. In this manner a storage vessel is obtained which will not break, not even at pressures above the normal operating pressure. Although a storage vessel of this type is quite satisfactory in practice, it has appeared to be practically impossible to manufacture such a vessel with the required precision and quality. Especially the making of welds in the corner points of the bases is practically impossible to realise, because hardly any space for the required welding apparatus is available in the corners where said bases join each other. Thus, there is a risk that the welds will not be of the required quality, so that cracking may easily occur at that location in use, when higher pressures occur.

An object of the invention is to provide a method for manufacturing a storage vessel, as well as a storage vessel manufactured by means of said method, which can be manufactured in a simpler manner and at lower cost and which is furthermore stronger and more reliable than the prior storage vessel.

In order to accomplish that objective, the method according to the invention is characterized in that a first rectangular plate is folded to one side and the other about substantially parallel lines, in such a manner that a strip is formed comprising first plate portions, which extend in a first plane, and second plate portions, which extend in a second plane, with connecting plate portions extending between said first and said second plate portions, and an upper plate and a lower plate are placed on said first and second plate portions, after which said upper and said lower plate are connected along substantially parallel lines to the centres of, respectively, each of said first and second plate portions of said strip, after which the whole is compressed, whereby the connecting plate portions deflect sideways, and the edges of said upper plate and said lower plate are connected together all around, whereupon a medium is introduced into said vessel under a pressure above the normal operating pressure and the whole is blown up until the connecting portions of said first plate between the welding lines are entirely stretched and the portions of said upper and said lower plate between said welding lines are plastically deformed by being bent into a portion of a circular arc.

Thus, a storage vessel is obtained which in fact consists of three component plates, viz. the upper plate and the lower plate, with the first rectangular plate, which eventually forms the joining surfaces, positioned therebetween. In a first step of the present method, a first plate is folded along parallel lines in such a manner as to form a strip comprising first plate portions and second plate portions, which lie in spaced-apart planes, with connecting plate portions positioned therebetween. Then, an upper plate and a lower plate are placed on said first and second plate portions, which plates are connected along substantially parallel lines to the centres of, respectively, each of said first and second plate portions of said strip. Then the whole is compressed, whereby the connecting plate portions deform and deflect sideways, so that the upper plate and the lower plate are moved towards each other, after which the edges of the upper plate and the lower plate are welded together all around. With the method according to the invention, said welds are made in places which are readily accessible to the welding apparatus, so that high-quality, highly reliable welds can be made. After the various welds have been made, the whole is deformed by means of a pressurized medium, in such a manner that said upper and said lower wall are forced apart and the portions of the first plate positioned between the welding lines are entirely stretched and the portions of said upper and said lower wall positioned between said welding lines are deformed by being bent into portions of a circular arc. Thus, a storage vessel is obtained which will not exhibit any cracks, not even at pressures above the operating pressure.

The method according to the invention can also be carried out in a slightly modified manner, wherein the folded first rectangular plate is placed between an upper and a lower pressure plate of a pressure device, which pressure plates make contact with, respectively, said first and second plate portions, wherein the centres of said plate portions are fixed with respect to said pressure plates, after which the whole is compressed, whereby the connecting plate portions deflect sideways. Then, a lower plate and an upper plate are placed on said compressed first plate, which plates can now be easily welded together along their edges. Furthermore, said lower and upper plate are connected to the centres of said first and said second plate portions, preferably by laser welding. Then the whole can be blown up by introducing a pressurized medium, until the vessel has obtained its eventual shape.

When the upper wall and the lower wall are being pressed towards each other, the connecting plate portions positioned therebetween are deformed and deflect sideways thereby, so that the upper wall and the lower wall can be moved very closely together. In order to have said lateral deflection take place in a more controlled manner, another embodiment of the method according to the invention is characterized in that the first rectangular plate is bent in such a manner that bends are formed between said respective first and second plate portions and said connecting plate portions, which bends exhibit curvatures whose centres are located on either side of said connecting plate portions, all this in such a manner that said connecting plate portions will deflect sideways into an S-shape when the whole is being compressed. The plate portions present between said upper wall and said lower wall will neatly fold into an S-shape in this manner, so that the distance between said upper plate and said lower plate can be minimal upon compression, with the edges of said upper plate and said lower plate nearly touching one another, whereby said edges can easily be bent towards each other in order to be welded together. Preferably, the bends between the respective first and second plate portions and the connecting plate portions are all formed with the same radius of curvature.

In order to facilitate the welding together of the upper plate and the lower plate, said plates are dimensioned such that said plates project beyond the edges of the folded strip on all sides, and said plates are bent towards each other and welded together after the whole has been compressed.

In accordance with another embodiment of the method according to the invention, said first plate is provided with a number of rows of openings before being bent, wherein the openings of adjacent rows are staggered with respect to each other. In this manner a storage vessel is obtained wherein the various channels are connected via said openings, thus forming one space. Another advantage of this embodiment is the fact that it is possible, by suitably selecting the dimensions and the positions of said openings, to determine the strength of the connecting plate portions between said upper wall and said lower wall, so that the connecting plate portions will first be stretched out when the operating pressure rises above the normal operating pressure, so that the upper wall and the lower wall will slightly bulge out and the storage vessel volume will slightly increase, thus preventing fracture and leakage to the outside.

In another embodiment of the method according to the invention, the storage vessel is blown up in a conditioned oven by introducing a pressurized medium, in which oven the storage vessel is heated to a high temperature and enveloped by a corrosion-resistant protective gas. The storage vessel can thereby be heated to a temperature at which the material can deform in a low-stress manner, and any stress concentrations, for example in the welded seams, are furthermore minimized.

The welds can be made in any known manner, for example by resistance welding, but according to the invention it is preferred to use laser welding.

The invention furthermore relates to a storage vessel manufactured in accordance with the method disclosed above, whose further aspects are defined in claims 10 and 11. Such a storage vessel can be used for the storage of all kinds of media, but it is in particular suitable for use as a storage vessel in solar energy systems.

The method and the storage vessel according to the invention will now be explained in more detail with reference to the drawing, wherein an embodiment of such a storage vessel is shown by way of example.

Figures 1a, 1b and 1c are a plan view, a side view and a sectional view, respectively, of a storage vessel which has been manufactured in accordance with the method according to the invention.

Figure ld is a larger-scale view of part of the sectional view of Figure lc.

Figures 2a, 2b, 2c and 2d are successive views of the various steps of the method for manufacturing the storage vessel of Figure 1.

Figure 3 is a schematic plan view of the intermediate plate, which is provided with a pattern of staggered holes.

Figures 4a, 4b, 4c and 4d are successive views of the various steps of a slightly modified method for manufacturing a storage vessel.

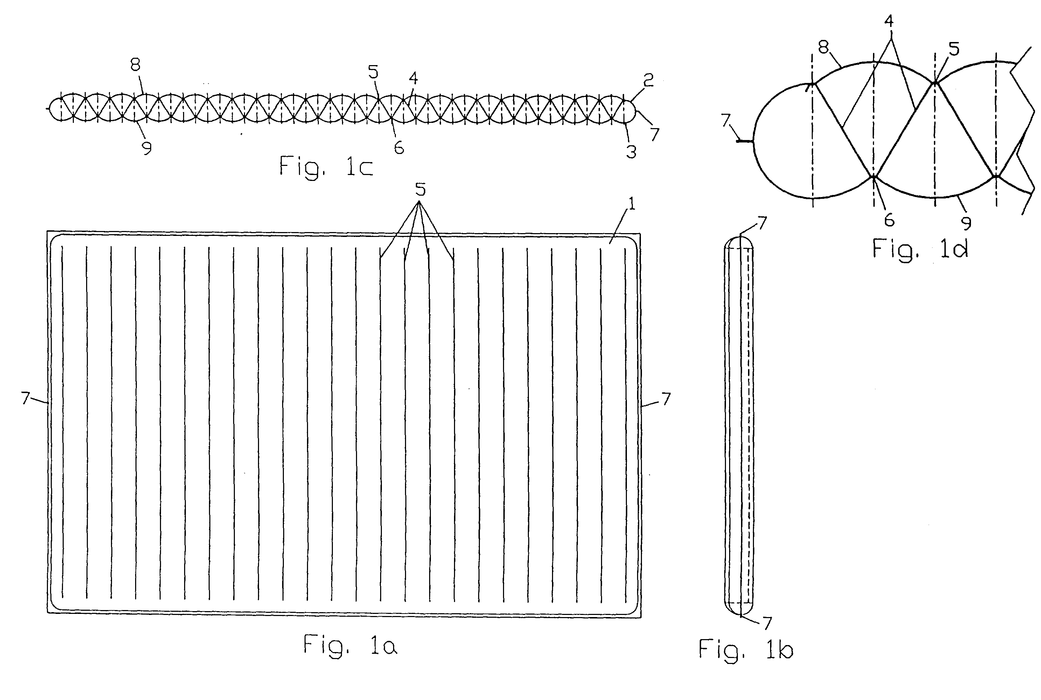

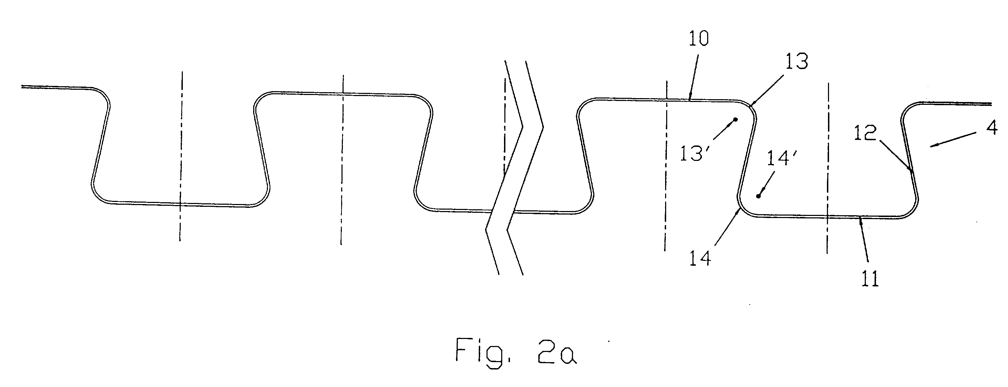

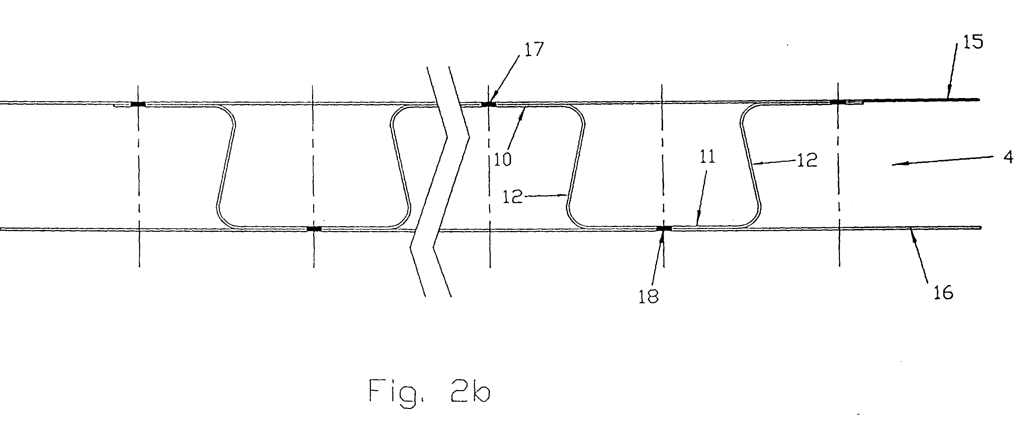

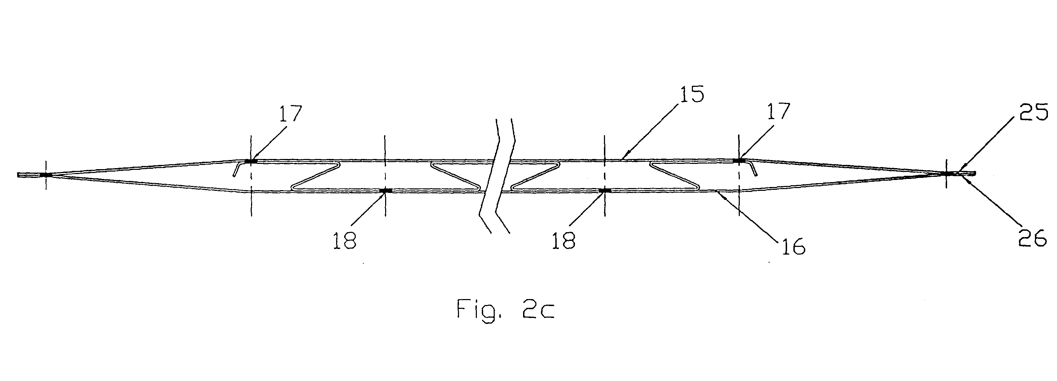

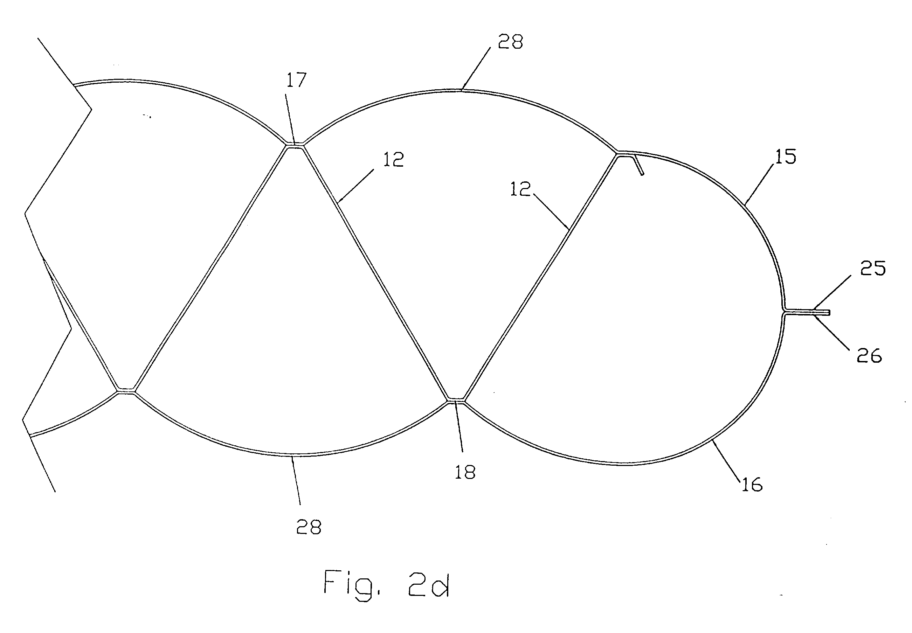

In Figure 1, numeral 1 indicates a storage vessel. Said storage vessel is built up of an upper plate 2 and a lower plate 3, with an intermediate plate 4 extending therebetween in a zig-zag manner. Said intermediate plate 4 is welded to upper plate 2 and lower plate 3 along lines 5 and 6, respectively. Plates 2 and 3 are welded together all around along edges 7. Between welds 5 and 6, the portions of plates 2 and 3 are deformed into portions of a circular arc 8 and 9, respectively, which has been done by introducing a pressurized medium into the vessel, as will be discussed in more detail yet. The storage vessel as shown in Figure 1 is manufactured in accordance with the method according to the invention, the successive manufacturing steps of which are schematically indicated in Figure 2.

Figure 2a shows how an intermediate plate 4 is folded along parallel folding lines to form a zig-zag structure, which comprises first plate portions 10 and second plate portions 11, which are positioned in spaced-apart planes. Positioned between said plate portions 10 and 11 are sloping intermediate plate portions 12, which join plate portions 10 and 11 via curvatures 13 and 14, respectively. The centres of curvature 13' and 14' are thereby located on different sides of plate portion 12, with the radii of curvature being identical in this embodiment.

After plate 4 has been folded to the shape which is shown in Figure 2a, an upper plate 15 and a lower plate 16 are placed on plate 4, which plates are supported on plate portions 10 and 11 of first plate 4. Then the centres of plate portions 10 and 11 are welded to upper plate 15 and lower plate 16 along welding lines 17 and 18, respectively. Said welding may take place by means of resistance welding, but it is preferred to use a laser welding process. As is shown in Figure 2b, plates 15 and 16 are dimensioned such that they project beyond zig-zag strip 4 all around.

Following this, the whole is compressed, for example by placing the whole in a press and moving plates 15 and 16 together. Plate portions 12 will be deformed thereby, which, on account of curvatures 13 and 14, takes place in such a manner that said parts will deflect into an S-shape and be neatly arranged between plates 15 and 16, all this as shown in Figure 2c. Following said compression, plates 15 and 16 have moved closely together, and the edges 25 and 26, respectively, are bent even more closely together and welded together all around, using a suitable welding process. A closed structure is formed in this manner, which is subsequently heated to a higher temperature in an oven, in which it is enveloped by a protective gas, after which a pressurized medium is introduced into the closed space, as a result of which the whole is blown up. The portions of plate 4 which are present between welding lines 17 and 18, respectively, will stretch out entirely thereby, until they form sloping, straight joining surfaces. As a result of the high pressure, the portions of plates 15 and 16 present between welding lines 17 and 18, respectively, will likewise be deformed by being bent into portions of a circular arc 28.

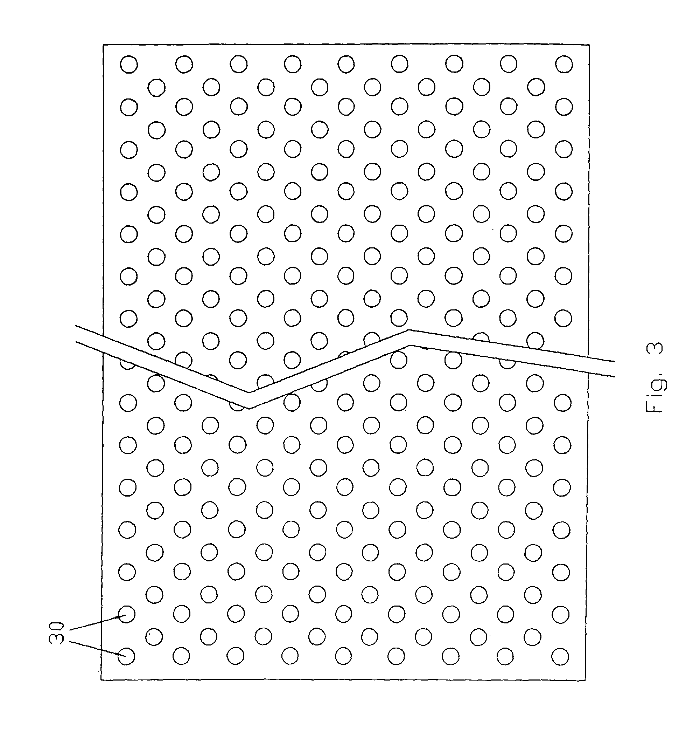

In this manner, a high-quality storage vessel is obtained. The welds are all made in places which are readily accessible to the welding apparatus, so that high-quality welds can be provided. By deforming the storage vessel under a high temperature during manufacture, the occurrence of stress concentrations in the material and in particular on the welds is prevented practically entirely, so that the risk of fractures at those locations has become very small. Furthermore, the outer circumference of the vessel is made up of two one-piece plates, which are interconnected at the edges all around, so that the risk of leakage to the ambient is reduced to a minimum. The risk of fracture under excessive operating conditions has been further reduced in that the vessel is blown up so that it consists of a succession of circular arcs 28, which are interconnected by connecting plate portions 12. As is shown again in Figure 3, connecting plate portions 12 are furthermore provided with a pattern of staggered holes 20. By suitably selecting this pattern and the dimensions of the holes, the tensile strength of said plates can be adapted to the prevailing operating conditions, so that, when the pressure rises above the normal operating pressure, the connecting plate portions 12 will be stretched out first, and the plate portions 28 will only be deformed when the pressure rises even further.

From the foregoing it will be apparent that the invention provides a method and a storage vessel manufactured in accordance with said method, which, using relatively simple means, provides a higher-quality storage vessel which is capable of resisting higher and more extreme operating conditions than is the case with the prior storage vessel.

Such a storage vessel is quite suitable for use in solar energy systems, wherein the vessel is used in a sloping position. Due to the staggered arrangement of openings 30 in connecting plate portions 12, the convection flows of the medium that occur in such a vessel are decelerated therein.

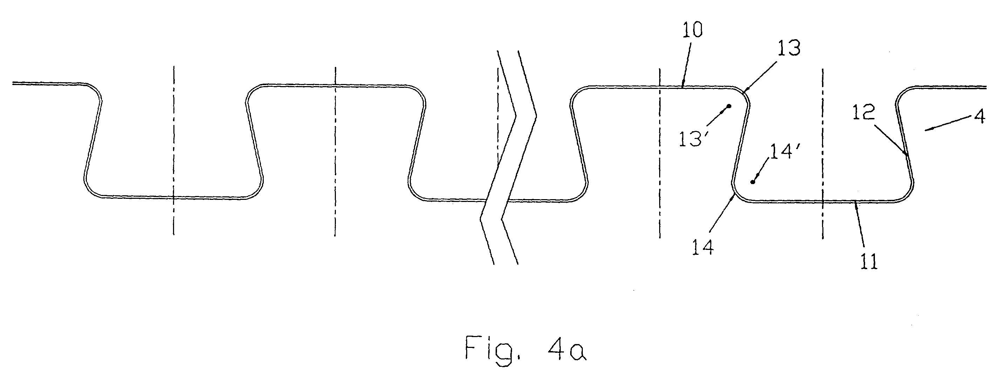

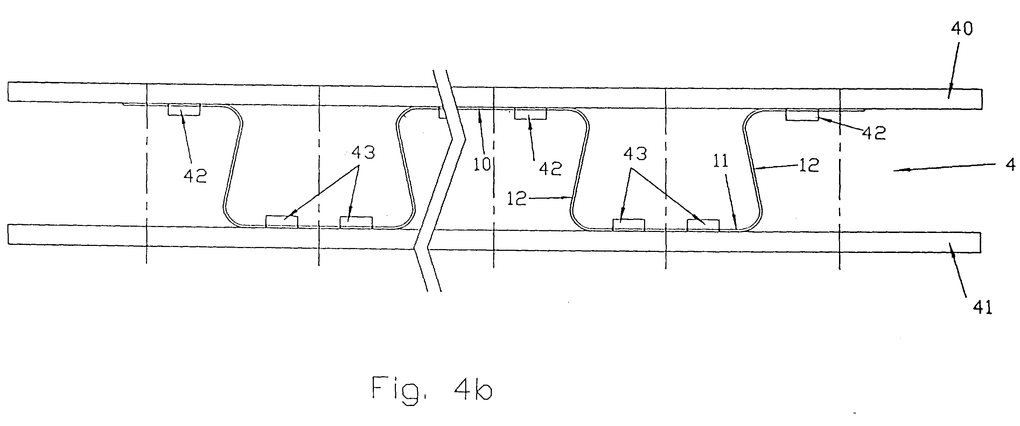

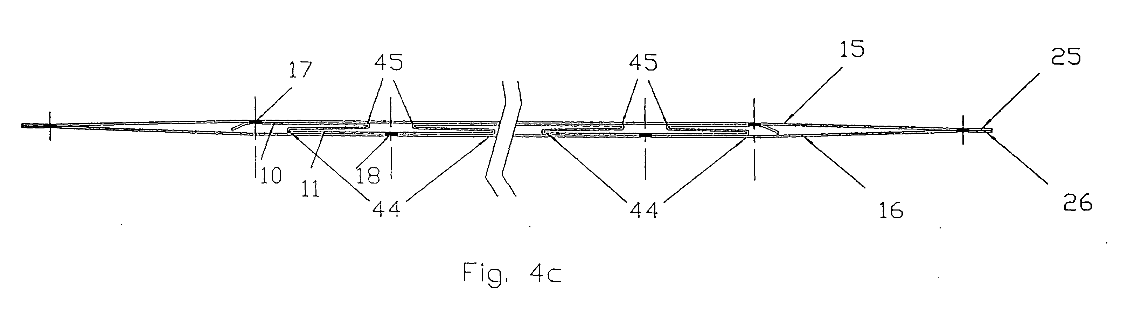

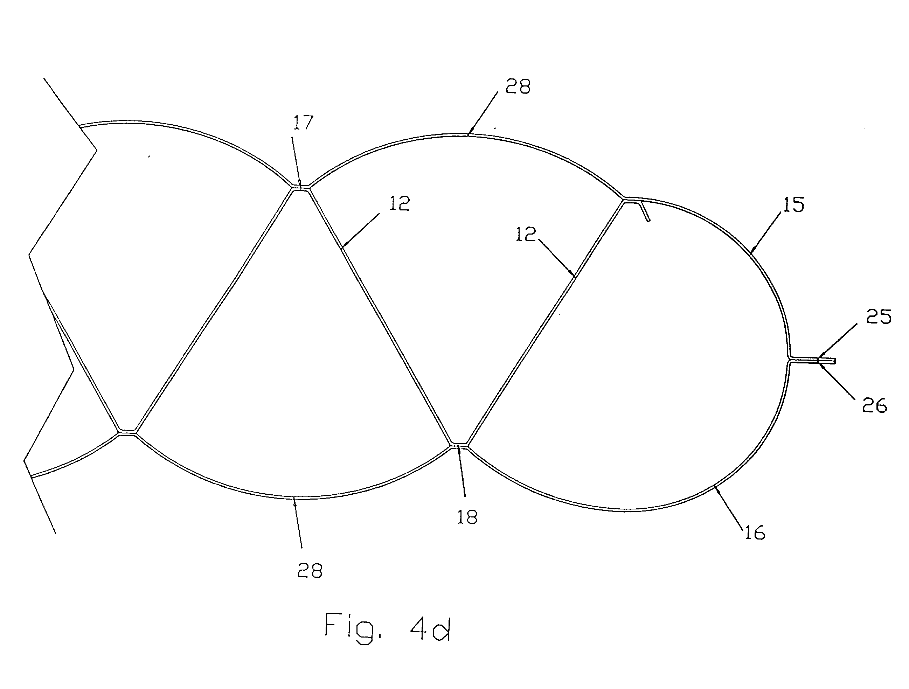

Figures 4a, 4b, 4c and 4d show the various steps of a slightly modified embodiment of the method according to the invention.

The first step, the folding of a first rectangular plate 4, corresponds with the step according to Figure 2a. The folded plate 4 is now positioned between a lower pressure plate 40 and an upper pressure plate 41 of a pressure device (not shown). Plates 40 and 41 abut against first and second plate portions 10, 11, wherein said plate portions are fixed with respect to plates 40 and 41, for example in that plates 40 and 41 are provided with cams 42, 43, which engage in openings of plate portions 10, 11. Also other possibilities of fixation are quite conceivable. With this embodiment of the method, plate portions 10, 11 and intermediate plate portions 12 are dimensioned such that curvatures 44 and 45, respectively, will be positioned closely together upon compression.

Following said compression, the compressed plate is removed from the pressure device and an upper plate 15 and a lower plate 16 are placed on said compressed plate. Plates 15 and 16 are welded to plate portions 10 and 11 at 17 and 18 again. Since plate portions 10 and 11 are properly supported by the folded plate portions in this case, no separate support of plate portions 10 and 11 is required during welding.

Plates 15 and 16 are furthermore welded together all around at their edges 25 and 26. Then the whole is blown up again to its eventual shape, in a similar manner as with the method according to Figure 2, as is shown in Figure 4d.

## Claims

1. A method for manufacturing a storage vessel for storing a medium, in particular for use in solar energy systems, which storage vessel comprises a lower wall and an upper wall, which are interconnected by joining surfaces which extend obliquely with respect to said upper and said lower wall, in such a manner that a storage vessel comprising channels of triangular section is formed and that the portions of said lower wall and said upper wall positioned between said joining surfaces are plastically deformed, mainly by bending, into portions of a circular cylinder by means of a pressurized medium, characterized in that
- a first rectangular plate is folded to one side and the other about substantially parallel lines, in such a manner that a strip is formed comprising first plate portions, which extend in a first plane, and second plate portions, which extend in a second plane, with connecting plate portions extending between said first and said second plate portions, and
- an upper plate and a lower plate are placed on said first and second plate portions,
- after which said upper and said lower plate are connected along substantially parallel lines to the centres of, respectively, each of said first and second plate portions of said strip,
- after which the whole is compressed, whereby the connecting plate portions deflect sideways,
- and the edges of said upper plate and said lower plate are connected together all around,
- whereupon a medium is introduced into said vessel under a pressure above the normal operating pressure and the whole is blown up until the connecting portions of said first plate between the welding lines are entirely stretched and the portions of said upper and said lower plate between said welding lines are plastically deformed by being bent into a portion of a circular arc.

2. A method for manufacturing a storage vessel for storing a medium, in particular for use in solar energy systems, which storage vessel comprises a lower wall and an upper wall, which are interconnected by joining surfaces which extend obliquely with respect to said upper and said lower wall, in such a manner that a storage vessel comprising channels of triangular section is formed and that the portions of said lower wall and said upper wall positioned between said joining surfaces are plastically deformed, mainly by bending, into portions of a circular cylinder by means of a pressurized medium, characterized in that
- a first rectangular plate is folded to one side and the other about substantially parallel lines, in such a manner that a strip is formed comprising first plate portions, which extend in a first plane, and second plate portions, which extend in a second plane, with connecting plate portions extending between said first and said second plate portions,
- after which the first plate is placed between an upper and a lower pressure plate of a pressure device, which pressure plates make contact with, respectively, said first and second plate portions and the centres of said plate portions are fixed with respect to said upper and said lower pressure plate,
- after which the whole is compressed, whereby the connecting plate portions deflect sideways, and
- an upper plate and a lower plate are placed on said compressed first plate, which plates are connected along substantially parallel lines to the centres of, respectively, each of said first and second plate portions,
- whereupon a medium is introduced into said vessel under a pressure above the normal operating pressure and the whole is blown up until the connecting portions of said first plate between the welding lines are entirely stretched and the portions of said upper and said lower plate between said welding lines are plastically deformed by being bent into a portion of a circular arc.

3. A method according to claim 1 or 2, characterized in that said first rectangular plate is bent in such a manner that bends are formed between said respective first and second plate portions and said connecting plate portions, which bends exhibit curvatures whose centres are located on either side of said connecting plate portions, all this in such a manner that said connecting plate portions will deflect sideways into an S-shape when the whole is being compressed.

4. A method according to claim 3, characterized in that the bends between the respective first and second plate portions and the connecting plate portions are all formed with the same radius of curvature.

5. A method according to claim 1, 2 or 3, characterized in that said upper and said lower plate are dimensioned such that said plates project beyond the edges of the folded strip on all sides, and in that said plates are bent towards each other and welded together after the whole has been compressed.

6. A method according to claim 1, 2, 3, 4 or 5, characterized in that said first plate is provided with a number of parallel rows of openings before being bent, wherein the openings of adjacent rows are staggered with respect to each other.

7. A method according to any one or more of the preceding claims, characterized in that said storage vessel is blown up in a conditioned oven by introducing a pressurized medium, in which oven the storage vessel is heated to a high temperature and enveloped by a corrosion-resistant protective gas.

8. A method according to claim 7, characterized in that said storage vessel is heated to a temperature at which the material can deform in a low-stress manner, and the stresses in the material are released.

9. A method according to any one or more of the preceding claims, characterized in that said welds are made by laser welding.

10. A storage vessel manufactured in accordance with the method according to any one of the preceding claims, comprising an upper wall and a lower wall, with connecting plate portions extending obliquely therebetween,
characterized in that said upper and said lower wall are each made up of, respectively, a rectangular upper and lower plate, between which a zig-zag folded plate is present, which is connected to said upper and said lower plate along its folding lines, wherein said upper and said lower plate extend beyond the edges of said zig-zag folded plate, being welded together at that location, wherein the whole is blown up by a pressurized medium, so that said upper and said lower plate are blown up between said welding lines to form a portion of a circular arc.

11. A storage vessel according to claim 10, in particular suitable for use in a solar energy system, characterized in that the openings in said connecting plate portions are provided in parallel rows, with the openings in adjacent rows being staggered with respect to each other, all this in such a manner that the openings in adjacent connecting plate portions are staggered with respect to each other.
